# EUROPÄISCHE PATENTANMELDUNG

(11) **EP 0 872 169 A2**
(43) Veröffentlichungstag der Anmeldung: **21.10.1998**
(21) Anmeldenummer: 98106442.1
(22) Anmeldetag: 08.04.1998
(51) Int. Cl.: A01D 41/02, A01D 67/00, B60K 15/03, B62D 21/16

(54) **Landwirtschaftliche Erntemaschine**

(30) Priorität: 15.04.1997 DE 19715600
(71) Anmelder: SAME DEUTZ-FAHR S.P.A., 24047 Treviglio (Bergamo) (IT)
(72) Erfinder: von Allwörden, Wilhelm, 89168 Oberstotzingen (DE)
(74) Vertreter: Quinterno, Giuseppe

(57) **Zusammenfassung**

Eine bekannte Erntemaschine ist als selbstfahrender Mähdrescher mit einer Drescheinrichtung und dieser nachfolgenden Trenneinrichtung ausgebildet. Grundsätzlich weist dieser Mähdrescher einen konventionellen Aufbau auf und ist mit Vorderrädern 2, steuerbaren Hinterrädern 3 und einer üblichen sich an einen Maschinenrumpf anschließenden Fördereinrichtung, einer Fahrerkabine 3, einem Korntank 4 für Erntegut und einem Antriebsmotor 5 ausgestattet. Dabei ist der Antriebsmotor 5 hinter dem Korntank 4 angeordnet. Der Kraftstofftanks ist seitlich neben der Trenneinrichtung angeordnet. Erfindungsgemäß ist der Kraftstofftank 6 oberhalb der als Schüttlers 12 ausgebildeten Trenneinrichtung angeordnet. Durch diese Anordnung braucht unterhalb und seitlich neben dem Schüttler 12 kein Platz für einen Kraftstofftank 6 bereitgestellt zu werden und dieser Platz kann für andere Zwecke genutzt werden. Um aber die Leistungsfähigkeit einer derartigen Erntemaschine zu steigern, ist es beispielsweise sinnvoll, die wirksame Breite von Schüttler 12, Rücklaufboden, Siebeinrichtung und Leiteinrichtung einzeln oder gemeinsam im Rahmen der Fahrzeugbreite hin im Hinblick auf eine maximale Ernteleistung verstellbar auszugestalten.

## Beschreibung

Die Erfindung betrifft eine landwirtschaftliche Erntemaschine in selbstfahrender Bauweise mit Vorderrädern und Hinterrädern, einem Maschinenrumpf und einem Antriebsmotor mit einem Kraftstofftank, wobei der Antriebsmotor auf dem Maschinenrumpf angeordnet ist.

Eine derartige Erntemaschine ist aus dem Prospekt 7-1894234 D/Dex der Firma John Deere bekannt. Die in diesem Prospekt Erntemaschinen sind selbstfahrende Mähdrescher der Baureihe 1100 mit grundsätzlich konventionellen Aufbau. Die beschriebenen Mähdrescher sind mit Vorderrädern, die als Antriebsräder ausgebildet sind, Hinterrädern, die als steuerbare Lenkrädern ausgebildet sind, einer sich an einen Maschinenrumpf anschließenden Fördereinrichtung, einer Mäheinrichtung, einer Trenneinrichtung für das Erntegut, einer Fahrerkabine, einem Korntank und einem Antriebsmotor ausgestattet. Dabei ist der Antriebsmotor hinter dem Korntank und vor den hinteren Lenkrädern angeordnet. Der Kraftstofftanks ist in Fahrrichtung auf der rechten Maschinenseite vor den Hinterrädern seitlich neben der Trenneinrichtung angeordnet.

Der Erfindung liegt die Aufgabe zugrunde, eine landwirtschaftliche Erntemaschine bereitzustellen, die gegenüber dem Stand der Technik verbessert ist und bezüglich der Raumausnutzung optimiert ist.

Diese Aufgabe wird dadurch gelöst, daß der Kraftstofftank auf dem Maschinenrumpf im Bereich der Hinterräder und dort im oberen Bereich der Erntemaschine angeordnet ist. Durch diese Anordnung braucht im Bereich seitlich neben den jeweiligen erntemaschinenspezifischen Einbauten kein Raum für einen Kraftstofftank bereitgestellt zu werden. Dieser Raum kann folglich für andere Zwecke, zum Beispiel für eine Verbreiterung der Maschine, genutzt werden. Hierbei ist von der Erkenntnis auszugehen, daß aufgrund gesetzlicher Bestimmungen die Breite einer landwirtschaftlichen Erntemaschine vorgegebene Grenzwerte nicht überschreiten darf, wenn die Erntemaschine auf öffentlichen Straßen bewegt werden soll. Dies ist aber fast immer notwendig, um die Erntemaschine von einem ersten Einsatzort zum einem anderen Einsatzort zu bewegen. Um aber andererseits die Leistungsfähigkeit einer derartigen Erntemaschine zu steigern, ist es beispielsweise sinnvoll, die wirksame Breite der Einbauten der jeweiligen Erntemaschine im Rahmen der geforderten Ernteleistung und der zulässigen Fahrzeugbreite verstellbar auszugestalten. Hierbei ist es inbesondere für eine Erhöhung der Ernteleistung sinnvoll, die Breite der Einbauten zu vergrößern. Wird nun erfindungsgemäß der Kraftstofftank aus diesem Bereich neben den Einbauten weggelegt, wird hier ein nicht unbeträchtlicher Raum für die zuvor angegebenen Maßnahmen freigegeben. Bezüglich der Größe des gewonnenen Raums ist es so, daß derzeitige Kraftstofftanks je nach Größe und Leistungsfähigkeit der Erntemaschine Volumen im Bereich von ca. 500 Liter Fassungsvermögen aufweisen.

In weiterer Ausgestaltung der Erfindung ist die Erntemaschine insbesondere ein Mähdrescher mit mindestens einer Drescheinrichtung, einer vorzugsweise einen Schüttler aufweisenden Trenneinrichtung und einer Sammeleinrichtung für Erntegut, wobei der Kraftstofftank erfindungsgemäß oberhalb der Trenneinrichtung angeordnet ist. Insbesondere bei einem Mähdrescher ist es zur Erhöhung der Ernteleistung sinnvoll, die Trennenrichtung gegebenenfalls einschließlich der darunterliegenden Reinigungseinrichtung auf die maximale Fahrzeugbreite zu verbreitern, wobei dies durch die erfindungsgemäße Anordnung des Kraftstofftanks erst möglich ist.

Im übrigen ist die Erfindung auch bei anderen Erntemaschinen wie beispielsweise einer Großpackenpresse, einem Feldhäcksler oder einer Mäh- und Aufbereitungsmaschine für Erntegut, (beispielsweise Gras) anwendbar.

In weiterer Ausgestaltung der Erfindung ist eine Fahrerkabine im Bereich der Vorderräder, dahinter ein Korntank für Erntegut, dahinter der Antriebsmotor und dahinter der Kraftstofftank angeordnet. Diese Anordnung ist aus mehreren Gründen vorteilhaft. Der Korntank für das Erntegut wird sinnvollerweise hinter der Fahrerkabine angeordnet, damit beispielsweise direkt aus der Fahrerkabine eine Beobachtungs- und Entnahmemöglichkeit in den Korntank besteht. Darüberhinaus ist diese Lage auch für die Gewichtsverteilung der Erntemaschine günstig. Da sich in vorteilhafter Weise der Antriebsmotor an den Korntank anschließt, wird der Kraftstofftank hinter dem Antriebsmotor angeordnet, so daß sich eine Reihenfolge: Fahrerkabine, Korntank für Erntegut, Antriebsmotor, Kraftstofftank ergibt. Diese Anordnung trägt zu einer günstigen Gewichtsverteilung bei, indem der Antriebsmotor mit seinem konstanten, verglichen mit anderen Bauteilen der Erntemaschine hohen Gewicht zwischen den Vorderrädern und den Hinterrädern angeordnet ist.

In Weiterbildung der Erfindung bildet der Kraftstofftank mit seiner Bodenwand ggfs. unter Einfügung einer Schutzeinrichtung die Abdeckhaube der Trenneinrichtung. Durch diese Ausbildung kann die sonst nötige Abdeckhaube zumindest in dem Kraftstofftankbereich eingespart werden. Eine Schutzeinrichtung ist ggfs. zwischen der Trenneinrichtung und der Bodenwand des Kraftstofftanks vorzusehen, um die Gefahr von Beschädigungen der Bodenwand des Kraftstofftanks beispielsweise durch von der Drescheinrichtung geförderte Fremdkörper, wie beispielsweise Steine oder dergl. auf alle Fälle zu verhindern. Hierzu kann die Schutzeinrichtung beispielsweise als Netzplatte oder Lochplatte ausgebildet sein.

In weiterer Ausgestaltung der Erfindung bildet der Kraftstofftank in dessen Erstreckungsbereich die obere Begrenzung der Erntemaschine. Somit sind für eine beispielsweise möglichst glattflächige äußere Kontur der Erntemaschine keine zusätzlichen Abdeckungen im Bereich des Kraftstofftanks notwendig.

In Weiterbildung der Erfindung erstreckte sich der Kraftstofftank über die gesamte Breite der Erntemaschine. Diese Ausbildung ist durch die erfindungsgemäße Anordnung überhaupt erstmals möglich, wobei dies wiederum mehrere Vorteile hat. Einerseits wird dadurch gegenüber nur seitlich angeordnetem Kraftstofftanks das mögliche Volumen erhöht. So ist im Rahmen der Erfindung vorgesehen, ein Tankvolumen in der Größenordnung von 1000 Liter zu realisieren, was ungefähr eine Verdoppelung des bisher möglichen Tankvolumens darstellt. Dadurch ist eine noch größere Unabhängigkeit der Erntemaschine, insbesondere im Ernteeinsatz, möglich, so daß die Ausfallzeiten bzw. Stillstandszeiten weiter reduziert werden.

Weiterhin wird durch die Erstreckung des Kraftstofftanks über die gesamte Breite der Erntemaschine wiederum eine Vergleichmäßigung der Gewichtsverteilung erreicht, da unabhängig vom Befüllungsgrad des Kraftstofftanks keine unterschiedlichen seitlichen Lasteinwirkungen auf die Erntemaschine - wie dies bei einem herkömmlich seitlich angeordneten Kraftstofftank der Fall ist - einwirken. Um ein Hin- und Herschwappen des Kraftstoffs in dem Kraftstofftank zu begrenzen bzw. zu verhindern, ist es im Rahmen der Erfindung weiterhin vorgesehen, für sich bekannte Schwallbleche in dem Kraftstofftank einzusetzen. Derartige Schwallbleche können sowohl in Längs- als auch in Querrichtung des Krafstofftanks beispielsweise in gitterförmiger Anordnung vorgesehen sein. Derartige Schwallbleche können durch entsprechende Anbildung an die Bodenwand und die obere Begrenzungswand des Kraftstofftanks auch zur Versteifung dieser Wände beitragen.

In Weiterbildung der Erfindung verjüngt sich die Querschnittsfläche des Kraftstofftanks von dessen vorderen Ende zu dessen hinteren Ende. Durch diese Ausbildung kann ohne zusätzliche Verkleidung gestalterischer Einfluß auf das Äußere der Erntemaschine genommen werden.

In Weiterbildung der Erfindung weist der Kraftstofftank eine auf Bedienhöhe heruntergeführte Befülleinrichtung auf. Diese Befülleinrichtung ist beispielsweise ein seitlich heruntergeführtes Befüllrohr, das in den oberen Bereich des Kraftstofftank einmündet. In dieses Befüllrohr kann dann beispielsweise der Kraftstoff durch ein entsprechend passendes Versorgungssystem hineingepumpt werden.

In vorteilhafter Ausgestaltung weist die Befülleinrichtung eine Pumpe und auch vorteilhaft einen Grenzwertgeber auf. Dabei ist die Befülleinrichtung so ausgelegt, daß beispielsweise mit einer konventionellen Zapfpistole Kraftstoff in die Befülleinrichtung eingefüllt wird und automatisch die Förderpumpe in Betrieb gesetzt wird, die entsprechend der Einfüllgeschwindigkeit des Kraftstoffs diesen in den Kraftstofftank fördert. Weiterhin ist dann vorteilhaft ein Grenzwertgeber vorgesehen, der bei Erreichen eines einstellbaren Höchststandes in dem Kraftstofftank die gesamte Befüllung stoppt. Selbstverständlich ist es im Rahmen der Erfindung auch vorgesehen, direkt an dem Kraftstofftank eine Befüllmöglichkeit beispielsweise in Form eines Befüllstutzens vorzusehen. Dieser ist vorteilhaft so angeordnet, daß diese im Bereich des Wartungszuganges zu dem Antriebsmotor liegt.

Zu diesem Wartungszugang ist es ohnehin erforderlich eine entsprechende Zugangsmöglichkeit in Form beispielsweise einer Leiter vorzusehen, so daß ohne Mehraufwand auch die Zugänglichkeit zum Befüllstutzen des Kraftstofftanks in einfacher Weise gegeben ist.

In weiterer Ausgestaltung der Erfindung kann aber die seitlich heruntergezogene Befülleinrichtung zusätzlich einen Befüllungstank aufweisen. Dieser Befüllungstank weist ein Tankvolumen auf, das lediglich auf ein Füllvolumen während des Befüllvorgangs ausgelegt ist. Dies ist beispielsweise sinnvoll, wenn z.B. aus Kanistern auf dem Feld der Kraftstoff nachgefüllt werden muß. Dazu ist dann der Befüllungstank vorteilhaft, in den die Kanister entleert werden und von dem dann durch die zuvor genannte Pumpe, die inbesondere - wie ausgeführt - elektrisch arbeitet, der Kraftstoff in den Kraftstofftank gefördert wird. Selbstverständlich kann es generell auch vorgesehen sein, zusätzlich oder alternativ beispielsweise eine handbetätigte Pumpe vorzusehen.

In Weiterbildung der Erfindung wird der Kraftstoff aus der Befülleinrichtung mit Überdruck oder Unterdruck in den Kraftstofftank gefördert. Hierbei wird in dem Kraftstofftank Unterdruck erzeugt, so daß der Kraftstoff aus der Befülleinrichtung beziehungsweise dem Befüllungstank in den Kraftstofftank gesaugt wird. Zur Erzeugung des Unterdrucks wird vorteilhaft das Ansaugsystem des Antriebsmotors beispielsweise auf der Saugseite vor einem Abgasturbolader herangezogen. Selbstverständlich kann auch bei vorhandener Unterdruckpumpe diese mit dem Kraftstofftank verschaltet sein. Umgekehrt wird der Überdruck in die Befülleinrichtung beziehungsweise den Befüllungstank geleitet, so daß der Kraftstoff in den Kraftstofftank gedrückt wird. Hierzu kann die beispielsweise von einem Luftpresser bereitgestellte Druckluft herangezogen werden. In jedem Falle wird eine Steuereinrichtung vorgesehen, die den Vorgang (Saugen / Drücken) steuert.

Weiterhin ist in bzw. an dem Kraftstofftank selbstverständlich eine Belüftungseinrichtung vorgesehen, durch die insbesondere während des Befüllvorgangs die in dem Kraftstofftank befindliche Luft entweichen kann.

Vorteilhafte Weiterbildungen der Erfindung sind der Zeichnungsbeschreibung zu entnehmen, in der ein Ausführungsbeispiel der Erfindung näher beschrieben ist.

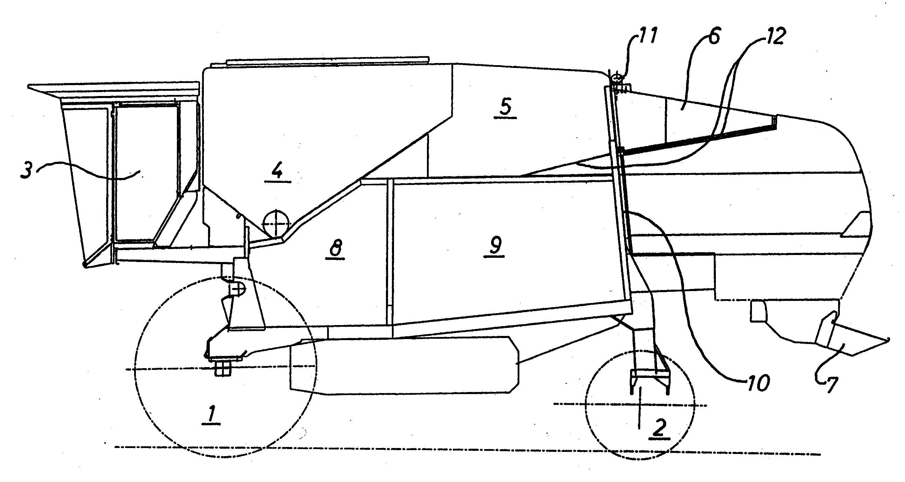

Die Zeichnung zeigt eine als Mähdrescher ausgebildete Erntemaschine, bei dem allerdings die vorne an dem Maschinenrumpf des Mähdreschers anlenkbare Fördereinrichtung und Mäheinrichtung abgenommen ist. Der Maschinenrumpf weist Vorderräder, die als Antriebsräder 1 ausgebildet sind, und Hinterräder 2a auf, die als Lenkräder 2 ausgebildet sind. Auf dem Maschinenrumpf ist im Bereich vor beziehungsweise oberhalb der Antriebsräder 1 eine Fahrerkabine 3 angeordnet. Direkt dahinter befindet sich der Korntank 4, an den sich hinter einer Seitenverkleidung der Antriebsmotor 5 anschließt. Hinter dem Antriebsmotor 5 ist der Kraftstofftank 6 angeordnet. Im hinteren Bereich des Mähdreschers befindet sich schließlich ein Auslaß 7 für Stroh. Hinter seitlichen Abdeckungen 8, 9 befindet sich die Drescheinrichtung, der mit 12 bezeichnete Schüttler, ein Vorbereitungsboden, eine Siebeinrichtung, ein Rücklaufboden und ein Windgebläse. Dabei ist insbesondere der Schüttler 12, der von einem mittleren Bereich des Mähdreschers nach hinten hin ansteigt, so ausgelegt, daß er sich nach Möglichkeit über die gesamte Breite des Mähdreschers erstreckt.

Der Kraftstofftank 6 ist oberhalb des Schüttlers 12 im Bereich oberhalb der hinteren Radachse 2a angeordnet und weist eine Querschnittsfläche auf, die sich vom vorderen Ende zum hinteren Ende verjüngt. In dem Kraftstofftank 6 sind Schwallbleche angeordnet, die auch Versteifungsfunktionen für den Kraftstofftank 6 übernehmen. Der Kraftstofftank 6 weist eine Befüllvorrichtung 10 auf, die als seitlich heruntergezogenes Befüllrohr ausgebildet ist. In dieses Befüllrohr oder einen an dessen unteren Ende anschließenden Befüllungstank wird der Kraftstoff eingefüllt und von einer elektrischen Pumpe in den Kraftstofftank 6 gefördert. Weiterhin ist auch an dem Kraftstofftank 6 unabhängig von der Befülleinrichtung 10 ein Befüllstutzen 11 vorgesehen, über den der Kraftstofftank 6 direkt befüllt werden kann. Dabei ist der Befüllstutzen 11 vorzugsweise mit einer Entlüftungsvorrichtung versehen. Schließlich ist der Kraftstofftank mit Tankstandsanzeigevorrichtungen versehen. Dies sind einerseits elektrisch oder elektrisch-mechanisch arbeitende Geber, deren Signale ausgewertet auf Anzeigeinstrumenten in der Fahrerkabine 3 angezeigt oder in einem Bordcomputer verarbeitet werden. Darüberhinaus ist aber auch noch eine optische Füllstandsanzeige direkt an dem Kraftstofftank 6 vorgesehen, die beispielsweise als Füllstandssichtrohr ausgebildet ist. Dies hat den Vorteil, daß insbesondere während des Tankvorgangs die eingefüllte Menge Kraftstoff direkt optisch erfaßbar ist.

## Patentansprüche

1. Landwirtschaftliche Erntemaschine in selbstfahrender Bauweise mit Vorderrädern und Hinterrädern, einem Maschinenrumpf und einem Antriebsmotor mit einem Kraftstofftank, wobei der Antriebsmotor auf dem Maschinenrumpf angeordnet ist,
**dadurch gekennzeichnet**, daß der Kraftstofftank (6) auf dem Maschinenrumpf im Bereich der Hinterräder und dort im oberen Bereich der Erntemaschine angeordnet ist.

2. Landwirtschaftliche Erntemaschine nach Anspruch 1, insbesondere Mähdrescher mit mindestens einer Drescheinrichtung, einer vorzugsweise einen Schüttler aufweisenden Trenneinrichtung und einer Sammeleinrichtung für Erntegut,
**dadurch gekennzeichnet**, daß der Kraftstofftank (6) oberhalb der Trenneinrichtung angeordnet ist.

3. Landwirtschaftliche Erntemaschine nach Anspruch 1 oder 2,
**dadurch gekennzeichnet**, daß eine Fahrerkabine (3) im Bereich der Vorderräder, dahinter ein Korntank (4) für Erntegut, dahinter der Antriebsmotor (5) und dahinter der Kraftstofftank (6) angeordnet ist.

4. Landwirtschaftliche Erntemaschine nach einem der Ansprüche 2 oder 3,
**dadurch gekennzeichnet**, daß der Kraftstofftank (6) mit seiner Bodenwand gegebenenfalls unter Einfügung einer Schutzeinrichtung die Abdeckhaube der Trenneinrichtung bildet.

5. Landwirtschaftliche Erntemaschine nach einem der vorherigen Ansprüche,
**dadurch gekennzeichnet**, daß der Kraftstofftank (6) die obere Begrenzung der Erntemaschine bildet.

6. Landwirtschaftliche Erntemaschine nach einem der vorherigen Ansprüche,
**dadurch gekennzeichnet**, daß der Kraftstofftank (6) sich über die gesamte Breite der Erntemaschine erstreckt.

7. Landwirtschaftliche Erntemaschine nach einem der vorherigen Ansprüche,
**dadurch gekennzeichnet**, daß die Querschnittsfläche des Kraftstofftanks (6) sich vom vorderen Ende zum hinteren Ende verjüngt.

8. Landwirtschaftliche Erntemaschine nach einem der vorherigen Ansprüche,
**dadurch gekennzeichnet**, daß der Kraftstofftank (6) eine auf Bedienhöhe heruntergeführte Befülleinrichtung (10) aufweist.

9. Landwirtschaftliche Erntemaschine nach Anspruch 8,
**dadurch gekennzeichnet**, daß die Befülleinrichtung (10) eine Pumpe und einen Grenzwertgeber aufweist.

10. Landwirtschaftliche Erntemaschine nach Anspruch 8 oder 9,
**dadurch gekennzeichnet**, daß die Befüllungseinrichtung (10) einen Befüllungstank aufweist.

11. Landwirtschaftliche Erntemaschine nach einem der Ansprüche 8 bis 10,
**dadurch gekennzeichnet**, daß der Kraftstoff aus der Befülleinrichtung (10) mit Überdruck oder Unterdruck in den Kraftstofftank (6) gefördert wird.
